# EUROPÄISCHE PATENTANMELDUNG

(11) **EP 1 593 548 A2**
(43) Veröffentlichungstag der Anmeldung: **09.11.2005**
(21) Anmeldenummer: 05009668.4
(22) Anmeldetag: 03.05.2005
(51) Int. Cl.: B60P 7/08, B60P 7/13, B64D 9/00

(54) **Adapter für eine Befestigungsschiene, System aus Befestigungsschiene und Adapter, Palette für den Frachtverkehr, Befestigungseinrichtung und Sicherungsmittel**

(30) Priorität: 05.05.2004 DE 102004022551
(71) Anmelder: Hoffmann Air Cargo Equipment GmbH, 61169 Friedberg (DE)
(72) Erfinder: Schneider, Michael, Dr., 61194 Niddatal (DE)
(74) Vertreter: Schwarz-Haar, Gabriele

(57) **Zusammenfassung**

Es werden ein Adapter (10) für eine Befestigungsschiene (1), ein System aus Befestigungsschiene (1) und Adapter (10) für eine Palette für den Frachtverkehr, eine entsprechende Palette, eine entsprechende Befestigungseinrichtung und ein Sicherungsmittel vorgeschlagen. In den Nut der Befestigungsschiene (1) ist ein Schiebestück seitlich einschiebbar oder in eine Ausnehmung einsteckbar und anschließend in einer Ausnehmung befestigbar, wobei die Ausnehmungen eine erste Form aufweisen. Der Adapter (10) ist an der Befestigungsschiene (1) befestigt und selbst in einem Abschnitt als ein Abschnitt einer derartigen Befestigungsschiene (1) ausgebildet. Der Adapter (10) weist mindestens eine Ausnehmung auf, welche mindestens eine von der ersten Form abweichende zweite Form aufweist.

## Beschreibung

Die Erfindung betrifft einen Adapter für eine Befestigungsschiene mit C-Profil und einer Mehrzahl von Ausnehmungen mit einer ersten Form, wobei ein Schiebestück in die Nut des C-Profils seitlich einschiebbar oder in die Ausnehmungen einsteckbar ist und anschließend in einer Ausnehmung befestigbar ist. Die Erfindung betrifft ferner ein System aus einem derartigen Adapter und einer Befestigungsschiene und einer Palette für den Frachtverkehr. Außerdem betrifft die Erfindung eine Befestigungseinrichtung für ein lösbar an einer Transportpalette zu befestigendes Sicherungsmittel wie Netz, Gurt oder dergleichen. Die Erfindung betrifft weiterhin ein Sicherungsmittel für eine Palette oder für eine Befestigungseinrichtung.

Aus der DE 197 38 679 C1 ist bereits eine derartige Befestigungseinrichtung bekannt, wobei das Schiebestück eine Öse für Sicherungsmittel für Frachtstücke aufweist, so dass diese an dem Schiebestück sicher befestigt werden können. Die Frachtstücke können damit auf einer Transportpalette gesichert werden. Die bekannte Befestigungsschiene und das bekannte Schiebestück werden umfangreich für Luftfracht-Anwendungen eingesetzt, wobei eine Fremdnutzung der universell einsetzbaren Sicherungsmittel und Schiebestücke für die betroffenen Unternehmen zu großen Schäden führt. Dies ist darin begründet, dass eine Unterscheidung der Befestigungseinrichtungen für verschiedene Luftfahrtunternehmen bzw. andere Anwendungen mit der bekannten Lösung nicht möglich ist.

In der DE 299 20 144 U1 ist ein Schiebestück zur Verhinderung von Fremdnutzungen der Luftfrachtnetze angegeben, dessen Sicherungsbügel eine Nase aufweist. Die Befestigungsschiene weist ebenfalls in einer der Einbuchtungen eine entsprechende Ausnehmung auf, so dass beim Einstecken des Schiebestücks in die Einbuchtungen die seitliche Nase des Schiebestücks in die Ausnehmung der Befestigungsschiene formschlüssig eingreift und in dieser festgelegt wird. Nachteilig und aufwändig an dieser Lösung ist, dass die Befestigungsschienen zur Verwendung der Schiebestücke an den entsprechenden Stellen durch Einarbeiten der Ausnehmungen verändert werden müssen. Des weiteren ist die Variabilität des Systems begrenzt, da durch die Ausnehmungen in der Befestigungsschiene die Orte, an denen die entsprechend gekennzeichneten Schiebestücke angeordnet werden müssen, bereits vorgegeben sind.

Der Erfindung liegt die Aufgabe zugrunde, individuelle Befestigungseinrichtungen zur Verhinderung von Fremdnutzungen zu schaffen, die wenig materialaufwändig sind. Die Befestigungsschiene sollte hierbei nicht verändert werden. Des weiteren soll das System variabel in Bezug auf den Ort der Veränderung sein. Es war außerdem gewünscht, eine große Anzahl von individuellen Lösungen bereitzustellen, beispielsweise für verschiedene Luftfracht-Unternehmen.

Die Aufgabe wird erfindungsgemäß dadurch gelöst, dass ein Adapter für eine Befestigungsschiene vorgesehen ist, welcher an der Befestigungsschiene befestigt ist und selbst in einem Abschnitt als ein Abschnitt einer derartigen Befestigungsschiene ausgebildet ist, wobei der Adapter mindestens eine Ausnehmung aufweist, die mindestens eine von der ersten Form abweichende zweite Form aufweist. Die Aufgabe wird außerdem erfindungsgemäß von einem System aus Befestigungsschiene und Adapter für eine Palette gelöst, wobei an mindestens einer Position der Befestigungsschiene ein Adapter befestigt ist. Eine Palette für den Frachtverkehr mit einem derartigen System löst ebenfalls erfindungsgemäß die Aufgabenstellung. Die Aufgabe wird ferner durch eine Befestigungseinrichtung mit einer an der Transportpalette angeordneten Befestigungsschiene mit Ausnehmungen zum Befestigen eines ersten Schiebestücks, welches an dem Sicherungsmittel angebracht ist, und mit einem in den Ausnehmungen der Luftfrachtpalette befestigbaren Adapter gelöst, welcher eine von den Ausnehmungen der Befestigungsschiene abweichende Ausnehmung für ein von dem ersten Schiebestück abweichendes zweites an dem Sicherungsmittel angebrachtes Schiebestück aufweist, wobei das zweite Schiebestück so gestaltet ist, dass es nicht in den Ausnehmungen der Befestigungsschiene befestigbar ist. Die Aufgabenstellung wird außerdem von einem Sicherungsmittel gelöst, wobei an mindestens einer Position des Sicherungsmittels, die für die Befestigung an einer Position der Palette oder der Befestigungsvorrichtung mit Adapter vorgesehen ist, das zweite Schiebestück angeordnet ist.

Die erfindungsgemäßen Lösungen haben den Vorteil, dass ein für verschiedene Anwender, beispielsweise verschiedene Luftfracht-Unternehmen, individuelles System bereitgestellt wird, welches die Fremdnutzung von Befestigungseinrichtungen wirksam unterbindet. Dies wird durch wenige Zusatzeinrichtungen, nämlich den Adapter, erreicht, wobei eine Veränderung an der Befestigungsschiene nicht vorgenommen werden muss. Die für die erfindungsgemäße Lösung bereitzustellenden Schiebestücke müssen hierfür ebenfalls nur geringfügig verändert werden.

Durch die in den abhängigen Ansprüchen aufgeführten Maßnahmen sind vorteilhafte Weiterbildungen und Verbesserungen der in den unabhängigen Ansprüchen angegebenen Gegenstände möglich. Besonders vorteilhaft ist, wenn die Ausnehmung des Adapters, die aus einem Paar von einander gegenüberliegenden Einbuchtungen gebildet werden, eine zweite von der ersten Form der Ausnehmungen der Befestigungsschiene abweichende Form aufweisen, nämlich beispielsweise eine Rechteck-, Quadrat- oder andere Vieleck-Form ausbilden. Diese sind einfach realisierbar und bieten für das dort einzusteckende Schiebestück eine einfache Handhabbarkeit. Eine vorteilhafte lösbare Befestigung des Adapters an der Befestigungsschiene erhöht die Variabilität des Systems. Die lösbare Befestigung kann dabei mittels einer Schraubverbindung oder mittels einer Verbindung, die dem herkömmlichen Schiebestück ähnelt, erfolgen. Dabei ist der Adapter in die Einbuchtungen der Befestigungsschiene einsteckbar und weist mindestens einen Sicherungsbügel auf, der bei Verschiebung des Adapters in Längsrichtung in der Nut formschlüssig in eine Ausnehmung der Befestigungsschiene einrastet. Besonders vorteilhaft ist ein erfindungsgemäßes System aus Adapter und Befestigungsschiene ausgebildet, wenn die Position des mindestens einen auf der Befestigungsschiene angeordneten Adapters eine für die Sicherheit der Ladung ausschlaggebende Position darstellt. Die Gefahr der Fremdnutzung wird dadurch weiter minimiert, da in dieser Position eine Befestigung des Sicherungsmittels an der Befestigungsschiene unbedingt erforderlich ist. Eine andere vorteilhafte Weiterbildung des erfindungsgemäßen Systems oder des Sicherungsmittels besteht darin, dass die mindestens eine Positionen, an denen ein Adapter auf der Befestigungsschiene angeordnet ist, für den Frachttyp und/oder den Frachttransporteur spezifisch fest vorgegeben ist. Auch hierdurch wird die Gefahr der Fremdnutzung weiter minimiert.

Die Erfindung wird nachfolgend anhand eines Ausführungsbeispiels näher erläutert, das in Zeichnungen dargestellt ist. Es zeigen
- Figur 1: eine herkömmliche Befestigungsschiene in einer perspektivischen Ansicht,
- Figur 2: eine herkömmliche Befestigungsschiene in einer Ansicht von oben,
- Figur 3: ein erfindungsgemäßes System aus einem Adapter und einer Befestigungsschiene in einer Ansicht von oben,
- Figur 4: das erfindungsgemäße System aus Befestigungsschiene und Adapter in einer Querschnittdarstellung,
- Figur 5: das erfindungsgemäße System aus einer Befestigungsschiene und einem Adapter mit eingestecktem zugehörigen Schiebeelement, d.h. eine erfindungsgemäße Befestigungseinrichtung, in einer Ansicht von oben,
- Figur 6: ein für einen erfindungsgemäßen Adapter verwendbares Schiebestück (zweites Schiebestück der erfindungsgemäßen Befestigungseinrichtung) in einer Ansicht von der Seite,
- Figur 7: ein für einen erfindungsgemäßen Adapter verwendbares Schiebestück (zweites Schiebestück der erfindungsgemäßen Befestigungseinrichtung) in einer Ansicht von unten,
- Figuren 8, 9 und 10: drei Positionen eines erfindungsgemäßen Adapters in einer Befestigungsschiene (schematisch) und
- Figur 11: eine schematische Darstellung einer erfindungsgemäßen Palette in einer Ansicht von oben.

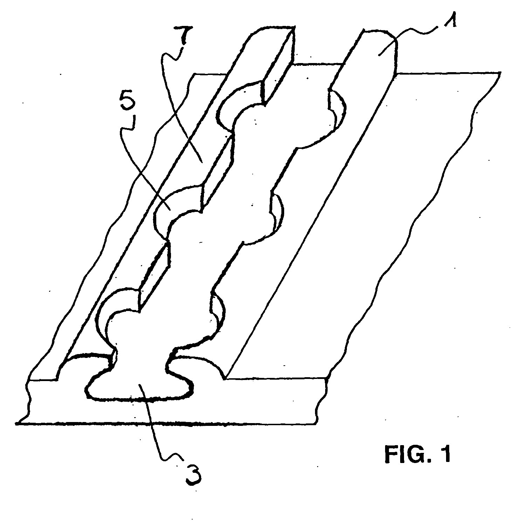

Eine bekannte Befestigungsschiene zur Aufnahme eines Schiebestücks zur Befestigung von Frachtstücken ist in Figur 1 gezeigt. Die Befestigungsschiene 1 weist ein C-Profil auf, in dessen Nut 3 ein beispielsweise aus der DE 197 38 679 C1 bekanntes Schiebestück seitlich eingeschoben oder von oben eingesteckt werden kann. Beim Einstecken des Schiebestücks von oben in eine Befestigungsschiene 1 greifen die seitlich am Fuß befestigten Nasen des Schiebestücks in ein Paar einander gegenüber liegender kreissegmentförmiger Einbuchtungen 5 an der Oberseite der Befestigungsschiene 1, die zusammen eine Ausnehmung bilden, ein. Der Fuß des Schiebestücks wird dabei durch die Einbuchtungen geführt, bis der Fuß des Schiebestücks auf der Basis der Befestigungsschiene aufsetzt. Ein Sicherungsbügel des Schiebestücks wird dabei von dem Steg 7 der Befestigungsschiene 1 entgegen einer Federkraft relativ zu dem Schiebestück nach oben verschoben. Bei einer Verschiebung des Schiebestücks in Längsrichtung in der Nut der Befestigungsschiene untergreifen die Nasen des Fußes anschließend die Stege 7 und der Sicherungsbügel rastet mit seinem Fuß in die aus den Paaren der gegenüber liegenden Einbuchtungen 5 gebildeten Form ein.

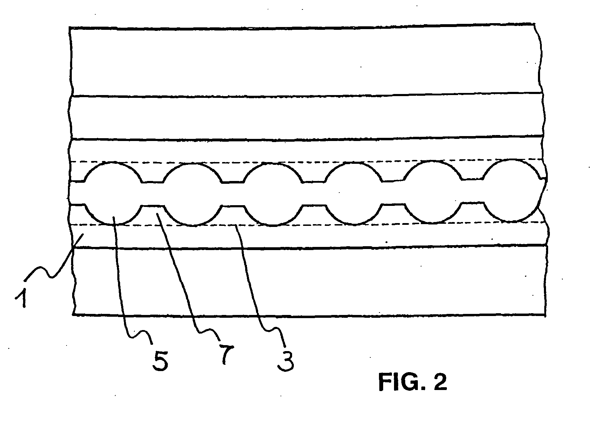

In Figur 2 ist die in Figur 1 dargestellte Befestigungsschiene noch einmal in einer Ansicht von oben dargestellt. Der Verlauf der Nut 3 ist mit einer gestrichelten Linie gekennzeichnet. Die Kreissegmente der Paare der einander gegenüber liegenden Einbuchtungen 5 bilden die Form eines Kreises.

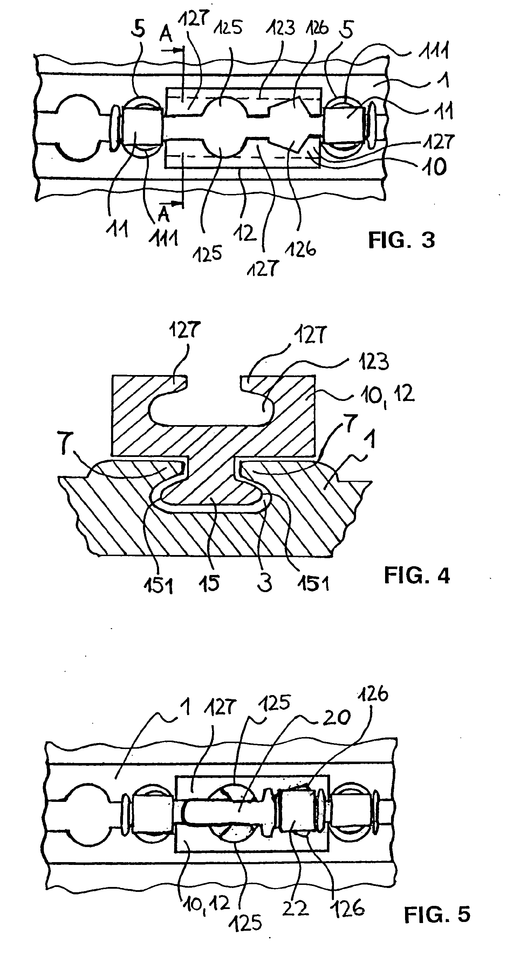

In Figur 3 ist ein Ausführungsbeispiel eines erfindungsgemäßen Systems aus einem Adapter 10 und einer Befestigungsschiene 1 in einer Ansicht von oben dargestellt. Der Adapter 10 ist auf der Oberseite der Befestigungsschiene 1 angeordnet. Er weist an seinen Enden jeweils einen Sicherungsbügel 11 auf, dessen kreisförmige Fußfläche 111 den Adapter 10 auf der Befestigungsschiene formschlüssig mit je einer Einbuchtung 5 festlegt. Mittig zwischen den beiden Sicherungsbügeln 11 ist der Hauptteil des Adapters 12 angeordnet, der einen ähnlichen Aufbau wie die Befestigungsschiene 1 aufweist. Der Hauptteil 12 ist aus einem C-Profil gebildet, der eine Nut 123 aufweist, die in Figur 3 mit einer gestrichelten Linie angedeutet ist. Das C-Profil weist in diesem Ausführungsbeispiel vier Einbuchtungen auf, von denen jeweils 2 einander gegenüber liegen. Die erste Einbuchtung 125 hat die Form eines Kreissegments und die zweite Einbuchtung 126 hat die Form eines Vierecks. Zusammen ergeben die jeweils gegenüber liegenden ersten Einbuchtungen 125 im Wesentlichen die Form eines Kreises und die einander gegenüber liegenden zweiten Einbuchtungen 126 die Form eines Siebenecks. Zwischen den Einbuchtungen und an den Enden des Hauptteils 12 sind Stege 127 angeordnet.

Figur 4 zeigt das erfindungsgemäße System aus Schiene 1 und Adapter 10 in einem Querschnitt, dessen Lage in Figur 3 mit der Linie A-A gekennzeichnet ist. Deutlich erkennbar ist in Figur 4, dass der Adapter 10 auf der Oberseite der Befestigungsschiene 1 angeordnet ist. Ebenfalls erkennbar ist das C-Profil des Hauptteils 12 des Adapters 10 mit der Nut 123. Das C-Profil endet an der Oberseite des Adapters 10 mit den Stegen 127. Mit dem Fuß 15 des Adapters 10 ist der Adapter 10 in der Nut 3 der Befestigungsschiene 1 angeordnet. Die Nasen 151, die seitlich am Fuß 15 des Adapters 10 angeordnet sind, untergreifen dabei die Stege 7 der Befestigungsschiene.

Figur 5 zeigt das anhand von Figur 3 erläuterte erfindungsgemäße System aus Befestigungsschiene und Adapter zusammen mit einem Schiebestück 20, also eine erfindungsgemäße Befestigungseinrichtung. Analog zu einem in Figur 5 nicht dargestellten ersten Schiebestück (eine Beschreibung eines derartigen Schiebestücks enthält beispielsweise die Druckschrift DE 197 38 679 C1, deren Offenbarung hiermit in die Beschreibung integriert wird) für die Befestigungsschiene 1 wird das zweite Schiebestück 20 für den Adapter 10 von oben in die Einbuchtungen 125 und 126 eingesteckt oder seitlich in die Nut 123 des Adapters 10 eingeschoben. Der Sicherungsbügel 22 wird dabei entgegen einer Federkraft durch die Stege 127 nach oben gedrückt. Bei einer Verschiebung des Schiebestücks 20 in Längsrichtung des Adapters 10 untergreifen die Nasen des Fußes des Schiebestücks 20 die Stege 127 und der Sicherungsbügel 22 rastet mit seiner Sechseck-förmigen Fußfläche in die Sechseck-Form ein, die von den beiden einander gegenüber liegenden Einbuchtungspaaren 126 gebildet werden.

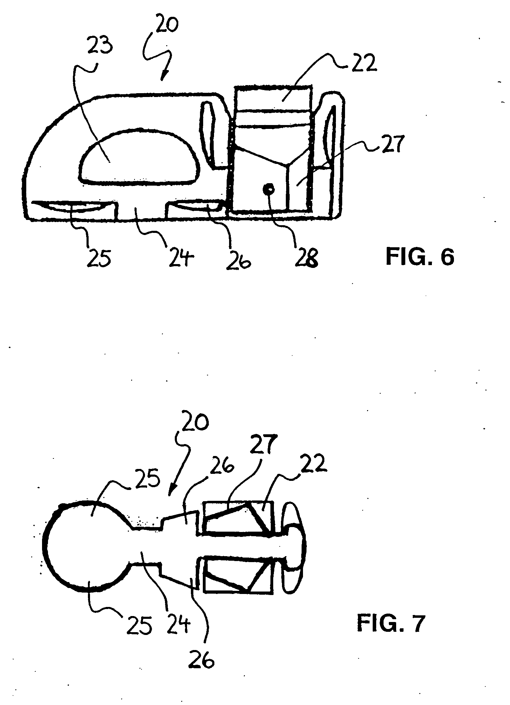

Das für einen erfindungsgemäßen Adapter angepasste Schiebestück, das zweite Schiebestück, 20 ist noch einmal anhand der Figuren 6 und 7 in zwei verschiedenen Ansichten dargestellt. Das Schiebestück 20 weist eine Öse 23 auf, die als Angriffspunkt für Sicherungsmittel, beispielsweise Sicherungsnetze für Fracht, dient. Am Fuß 24 sind Nasen 25 und 26 angeordnet, wobei sich diese Nasen auf der nicht sichtbaren, anderen Seite des Schiebestücks 20 wiederholen. Das Schiebestück 20 weist außerdem den bereits erwähnten Sicherungsbügel 22 auf. Der Sicherungsbügel 22 ist kappenartig ausgeführt und mit einem in dieser Figur nicht sichtbaren Längsschnitt versehen. Die beiden Schenkel des Bügels 27 verlaufen in einer Aufnahme des Schiebestücks. Der Sicherungsbügel 22 ist so in der Aufnahme des Schiebestücks angeordnet, dass er nur gegen eine Federkraft, die in Richtung des Fußes 24 des Schiebestücks 20 nach unten wirkt, nach oben geschoben werden kann. Hierfür ist im Sicherungsbügel 22 ein Stift 28 angeordnet, der mit einer im Längsschlitz angeordneten Feder zusammen wirkt.

Figur 7 zeigt das Schiebestück 20 nach Figur 6 noch einmal in einer Ansicht von unten. Die fußseitige Stirnfläche der ersten, einander gegenüber liegenden Nasen 25 des Schiebestücks 20 bilden im Wesentlichen eine Kreisfläche aus. Der Fuß 24 und die zweiten, einander gegenüber liegenden Nasen 26 bilden ein Viereck (Trapez) aus. Der Sicherungsbügel 22 bildet an der fußseitigen Stirnfläche seiner Schenkel zusammen mit dem Fuß 24 des Sicherungsbügels ein Sechseck aus.

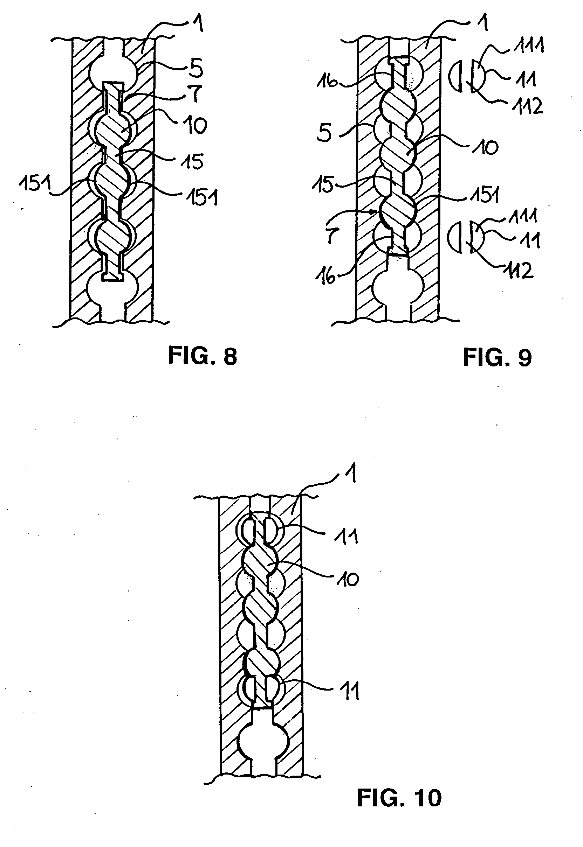

Anhand der Figuren 8, 9 und 10 soll im Folgenden erläutert werden, wie der in den Figuren 3 bis 5 gezeigte erfindungsgemäße Adapter 10 an der Befestigungsschiene 1 befestigt wird. Zur Veranschaulichung wird in den Figuren 8 bis 10 die Befestigungsschiene als durchscheinend betrachtet, so dass die Einbuchtungen der Befestigungsschiene und der Fuß 15 des Adapters mit den Nasen 151 von unten sichtbar sind. In Figur 8 ist dargestellt, dass der Adapter 10 mit seinem Fuß 15 und den fußseitig angeordneten Nasen 151, die einander paarweise gegenüber liegen, in die Einbuchtungen 5 der Befestigungsschiene 1 eingesetzt werden. Der Adapter 10 weist dabei an jeder Seite drei Nasen 151 auf, die einander gegenüber liegen und wobei die einander gegenüber liegenden Nasen 151 zusammen mit dem Fuß 15 in etwa eine Kreisform ausbilden. Diese Kreisform passt beim Einsetzen des Adapters 10 in die durch die Paare der Einbuchtungen 5, die einander gegenüber liegen, ausgebildete kreisförmige Öffnung. Anschließend wird, wie in Figur 9 gezeigt, der Adapter 10 in der Nut der Befestigungsschiene 1 in Längsrichtung verschoben, so dass die Nasen 151 unter die zwischen den Einbuchtungen 5 der Befestigungsschiene angeordneten Stege 7 untergreifen. Anschließend werden die Sicherungsbügel 11 an den Enden des Adapters 10 mit dem Längsschlitz 112 über die Aufnahmen 16 geführt. Die durch die Fußfläche 111 zusammen mit dem Längsschlitz 112 ausgebildete Kreisform passt hierbei formschlüssig in die durch die Paare der gegenüber liegenden Einbuchtungen 5 der Befestigungsschiene 1 ausgebildete Kreisform. Der Adapter 10 ist somit in der Befestigungsschiene 1, wie in Figur 10 dargestellt, festgelegt.

In einem weiteren, bevorzugten Ausführungsbeispiel können die Sicherungsbügel 11 auch bereits beim Einführen des Adapters 10 in die Befestigungsschiene 1 verschieblich in den Aufnahmen 16 des Adapters 10 angeordnet sein. Sie können hierbei analog zum bekannten Schiebestück gegen eine Federkraft verschieblich sein. In einem weiteren Ausführungsbeispiel kann auch nur ein Sicherungsbügel 11 an einem Ende des Adapters 10 vorgesehen sein. Entsprechend fällt am anderen Ende die Aufnahme 16 weg und der Adapter 10 endet in diesem Fall mit dem dortigen Ende des Hauptteils 12.

In einem weiteren Ausführungsbeispiel kann der Adapter 10 länger ausgebildet sein und beispielsweise 4 oder mehr Paare von einander gegenüber liegenden Nasen, die eine Kreisform ausbilden, aufweisen. Entsprechend kann der Hauptteil 12 des Adapters 10 ebenfalls länger ausgebildet sein, so dass er beispielsweise 3 oder mehr einander gegenüber liegender Paare von Einbuchtungen aufweist. Beispielsweise könnten zwei eine Kreisform ausbildende Paare von Einbuchtungen und ein ein Sechseck ausbildendes Einbuchtungs-Paar vorgesehen sein. In jedem Fall muss der Hauptteil 12 mindestens ein einander gegenüber liegendes Einbuchtungspaar, das eine andere Form als eine Kreisform ausbildet, aufweisen. Derartige Formen können beliebige Vielecke, beispielsweise Fünfecke, Quadrate, Achtecke usw. oder auch Dreiecke sein. Die Form der Nasen des für den Adapter angepassten Schiebestücks und des Sicherungsbügels dieses Schiebestücks müssen an die entsprechende Form angepasst sein.

In einem weiteren Ausführungsbeispiel kann der erfindungsgemäße Adapter 10 mittels einer anderen, lösbaren Verbindung, beispielsweise einer Schraubverbindung, mit der Befestigungsschiene 1 verbunden werden. Alternativ kann der erfindungsgemäße Adapter 10 mittels einer schwer lösbaren oder nicht lösbaren Verbindung mit der Befestigungsschiene 1 verbunden sein. Als schwer lösbare Verbindung kann beispielsweise eine Stiftverbindung eingesetzt werden.

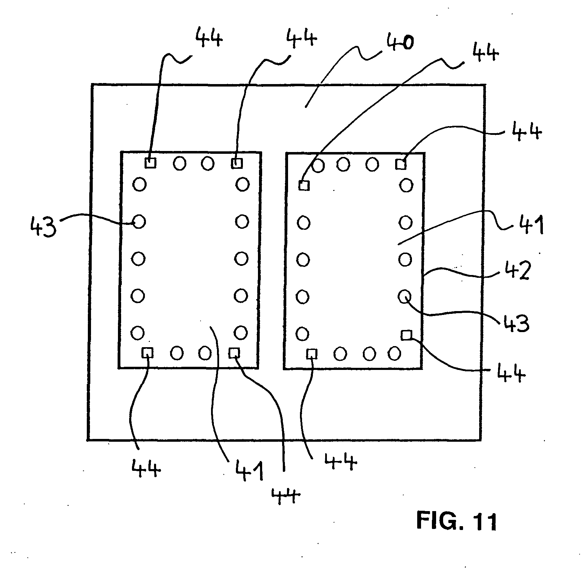

In Figur 11 ist eine Palette 40 dargestellt, die zur Aufnahme von Frachtgut dient. Die Palette weist zwei Öffnungen 41 auf, in denen das Frachtgut angeordnet wird. Am Rand 42 der Öffnungen 41 läuft eine hier nicht dargestellte Befestigungsschiene um die Öffnungen 41, um Befestigungseinrichtungen, beispielsweise Netze, zu befestigen, so dass das in den Öffnungen 41 angeordnete Frachtgut beim Transport nicht verrutschen kann. Entlang der Befestigungsschiene sind Schiebestücke angeordnet, in denen die Sicherungsmittel verankert sind. Die Positionen 43, an denen die konventionellen Schiebestücken verwendet werden, sind hier anhand von Kreisen 43 schematisch am Rand 42 der Öffnung 41 dargestellt. An mindestens einer, vorzugsweise an mehreren strategisch wichtigen Positionen 44, wird der erfindungsgemäße Adapter 10 für eine erfindungsgemäße Palette zusammen mit dem hierfür vorgesehenen Schiebestück 20 verwendet. Diese Orte sind in Figur 11 anhand von Quadraten 44 schematisch dargestellt. In dem hier dargestellten Ausführungsbeispiel befindet sich die Position 44 jeweils an den Ecken in der Öffnung 41, an denen die erfindungsgemäßen Adapter 10 angeordnet sind. Entsprechend ist das Sicherungsmittel (Netz oder dergl.) an den Positionen, an denen die Befestigung an der Palette an den mit Adapter versehenen Stellen vorgesehen ist, mit den für den Adapter ausgebildeten Schiebestücken 20 versehen und an den anderen Positionen mit den konventionellen Schiebestücken. Die Positionen 44 der Adapter an der Palette und entsprechend der für den Adapter ausgebildeten Schiebestücke 20 am Sicherungsmittel können entsprechend des Bedarfs der Transportgesellschaft oder spezifisch für den Frachttyp und/oder spezifisch für den Frachttransporteur auch an anderen Stellen vorgesehen sein. Es ist hierbei nicht notwendig, die übliche Befestigungsschiene zu verändern. Es kann somit eine Fremdnutzung von Befestigungseinrichtungen wirksam verhindert werden.

## Patentansprüche

1. Adapter (10) für eine Befestigungsschiene (1) mit C-Profil und einer Mehrzahl von Ausnehmungen mit einer ersten Form, wobei die Befestigungsschiene dazu bestimmt ist, ein Schiebestück in dem C-Profil aufzunehmen und in einer Ausnehmung zu befestigen, **dadurch gekennzeichnet, dass** der Adapter (10) an der Befestigungsschiene (1) befestigbar ist und selbst in einem Abschnitt als ein Abschnitt einer Befestigungsschiene (1) ausgebildet ist, wobei der Adapter (10) mindestens eine Ausnehmung aufweist, die mindestens eine von der ersten Form abweichende zweite Form aufweist.

2. Adapter nach Anspruch 1, **dadurch gekennzeichnet, dass** die Ausnehmung durch einander gegenüber liegende Einbuchtungspaare (5) auf der Oberseite des C-Profils gebildet wird.

3. Adapter nach einem der vorhergehenden Ansprüche, **dadurch gekennzeichnet, dass** zur Befestigung des Schiebestücks (20) in der Befestigungsschiene (1) ein Sicherungsbügel (22) des Schiebestücks (20) bei Verschiebung des Schiebestücks (20) in Längsrichtung in der Nut (3) formschlüssig in eine Ausnehmung einrastet.

4. Adapter nach einem der vorhergehenden Ansprüche, **dadurch gekennzeichnet, dass** die erste Form eine Kreis-Form und die zweite Form eine Rechteck- oder Quadrat- oder eine Dreieck- oder eine andere Vieleck-Form ist.

5. Adapter nach einem der vorhergehenden Ansprüche, **dadurch gekennzeichnet, dass** der Adapter (10) auf der Oberseite zwei oder mehr Ausnehmungen aufweist.

6. Adapter nach einem der vorhergehenden Ansprüche, **dadurch gekennzeichnet, dass** der Adapter (10) an der Befestigungsschiene (1) lösbar befestigt ist.

7. Adapter nach einem der vorhergehenden Ansprüche, **dadurch gekennzeichnet, dass** der Adapter (10) zur Befestigung in der Befestigungsschiene (1) in die Nut (3) der Befestigungsschiene (1) einschiebbar oder in mindestens eine Ausnehmung der Befestigungsschiene (1) einsteckbar ist und mindestens einen Sicherungsbügel (11) aufweist, der bei Verschiebung des Adapters (10) in Längsrichtung der Befestigungsschiene (1) formschlüssig in eine Ausnehmung der Befestigungsschiene (1) einrastet.

8. Adapter nach einem der Ansprüche 1 bis 6, **dadurch gekennzeichnet, dass** der Adapter (10) mittels einer Schraubverbindung an der Befestigungsschiene (1) befestigbar ist.

9. System aus Befestigungsschiene (1) und Adapter (10) für eine Palette (40) für den Frachtverkehr nach einem der vorhergehenden Ansprüche, **dadurch gekennzeichnet, dass** an mindestens einer Position der Befestigungsschiene (1) ein Adapter (10) befestigt ist.

10. System nach Anspruch 9, **dadurch gekennzeichnet, dass** die mindestens eine Position eine für die Sicherheit der Ladung in der Palette (40) ausschlaggebende Position darstellt.

11. System nach einem der Ansprüche 9 oder 10, **dadurch gekennzeichnet, dass** die mindestens eine Position für einen Frachttyp und/oder einen Frachttransporteur spezifisch fest vorgegeben ist.

12. Palette für den Frachtverkehr mit einem System nach einem der Ansprüche 9 bis 11.

13. Befestigungseinrichtung für ein lösbar an einer Transportpalette zu befestigendes Sicherungsmittel wie Netz, Gurt oder dergleichen, mit einer an der Transportpalette angeordneten Befestigungsschiene (1) mit Ausnehmungen zum Befestigen eines ersten Schiebestücks, welches an dem Sicherungsmittel angebracht ist, und mit einem in den Ausnehmungen der Luftfrachtpalette befestigbaren Adapter (10), welcher eine von den Ausnehmungen der Befestigungsschiene (1) abweichende Ausnehmung für ein von dem ersten Schiebestück abweichendes, an dem Sicherungsmittel angebrachtes zweites Schiebestück (20) aufweist, wobei das zweite Schiebestück (20) so gestaltet ist, dass es nicht in den Ausnehmungen der Befestigungsschiene (1) befestigbar ist.

14. Befestigungseinrichtung nach Anspruch 13, **dadurch gekennzeichnet, dass** die Befestigungsschiene (1) und der Adapter (10) jeweils ein C-Profil aufweisen, an dessen Oberseite die Ausnehmungen angeordnet sind.

15. Befestigungseinrichtung nach Anspruch 14, **dadurch gekennzeichnet, dass** das erste Schiebestück (20) und der Adapter (10) in die Nut des C-Profils seitlich einschiebbar oder in die Ausnehmungen einsteckbar sind.

16. Befestigungseinrichtung nach einem der Ansprüche 13 bis 15, **dadurch gekennzeichnet, dass** die Ausnehmungen der Befestigungsschiene (1) eine erste Form und die Ausnehmung des Adapters (10) eine von der ersten Form abweichende zweite Form aufweisen.

17. Befestigungseinrichtung nach Anspruch 16, **dadurch gekennzeichnet, dass** die erste Form eine Kreis-Form und die zweite Form eine Rechteck-oder Quadrat- oder eine Dreieck- oder eine andere Vieleck-Form ist.

18. Befestigungseinrichtung nach einem der Ansprüche 13 bis 17, **dadurch gekennzeichnet, dass** zur Befestigung des ersten Schiebestücks (20) in der Befestigungsschiene (1) oder zur Befestigung des zweiten Schiebestücks in dem Adapter (10) ein Sicherungsbügel (11) des jeweiligen Schiebestücks bei Verschiebung des jeweiligen Schiebestücks in Längsrichtung der Befestigungsschiene (1) oder des Adapters (10) formschlüssig in eine Ausnehmung der Befestigungsschiene (1) oder des Adapters (10) einrastet.

19. Befestigungseinrichtung nach einem der Ansprüche 13 bis 18, **dadurch gekennzeichnet, dass** der Adapter (10) an der Befestigungsschiene (1) lösbar befestigbar ist.

20. Befestigungseinrichtung nach einem der Ansprüche 13 bis 19, **dadurch gekennzeichnet, dass** zur Befestigung des Adapters (10) in der Befestigungsschiene (1) ein Sicherungsbügel des Adapters (10) bei Verschiebung des Adapters (10) in Längsrichtung der Befestigungsschiene (1) formschlüssig in eine Ausnehmung der Befestigungsschiene (1) einrastet.

21. Befestigungseinrichtung nach einem der Ansprüche 13 bis 19, **dadurch gekennzeichnet, dass** der Adapter (10) mittels einer Schraubverbindung an der Befestigungsschiene (1) befestigbar ist.

22. Befestigungseinrichtung nach einem der Ansprüche 13 bis 21, **dadurch gekennzeichnet, dass** die mindestens eine Position, an der ein Adapter (10) an der Befestigungsschiene (1) angeordnet ist, eine für die Sicherheit der in der Transportpalette angeordneten Ladung ausschlaggebende Position darstellt.

23. Sicherungsmittel für eine Palette nach Anspruch 12 oder für eine Befestigungseinrichtung nach einem der Ansprüche 13 bis 22, **dadurch gekennzeichnet, dass** an mindestens einer Position des Sicherungsmittels, die für die Befestigung an einer Position der Palette oder der Befestigungsvorrichtung mit Adapter (10) vorgesehen ist, das zweite Schiebestück angeordnet ist.

24. Sicherungsmittel nach einem der Anspruch 22 oder 23, **dadurch gekennzeichnet, dass** die mindestens eine Position für einen Frachttyp und/oder einen Frachttransporteur spezifisch fest vorgegeben ist.
